# DEMANDE DE BREVET EUROPEEN

(11) **EP 3 842 979 A1**
(43) Date de publication de la demande: **30.06.2021**
(21) Numéro de dépôt: 20217375.3
(22) Date de dépôt: 28.12.2020
(51) Int. Cl.: G06F 21/62, H04L 9/32, H04L 29/06

(54) **PROCEDE ET SYSTEME DE GESTION D'AUTORISATION POUR UNE PLATEFORME DE GOUVERNANCE UNIFIEE D'UNE PLURALITE DE SOLUTIONS DE CALCUL INTENSIF**

(30) Priorité: 27.12.2019 FR 1915659
(71) Demandeur: BULL SAS, 78340 Les Clayes sous Bois (FR)
(72) Inventeur: CALEGARI, Patrice, 91790 Boissy-sous-Saint-Yon (FR); LEVRIER, Marc, 91410 Saint-Cyr-Sous-Dourdan (FR)
(74) Mandataire: Cabinet Camus Lebkiri

(57) **Abrégé**

L'invention porte sur un système informatique et un procédé (100) de gestion d'autorisations accordées à un client utilisateur (2) à partir d'une interface agrégée (10) dans le cadre d'une gouvernance unifiée de solutions de calcul intensif (70) ; la gouvernance unifiée étant assurée au moins en partie par un système informatique (1) de gestion d'autorisations comportant : un microservice mandataire (20), un microservice de sécurité à jeton (30), au moins un référentiel de sécurité (35,36,37), au moins un référentiel d'autorisations (40), et un microservice de calcul pour chacune des solutions de calcul intensif ; ledit procédé comportant les étapes de : Réception (110) d'informations d'accès d'un client utilisateur (2), Authentification (120) du client utilisateur (2) et détermination (130) d'au moins un attribut de rôle pour le client utilisateur (2), Génération (140) d'un jeton d'authentification et détermination (150) d'autorisations accordées au client utilisateur (2), par l'au moins un microservice de calcul.

## Description

L'invention s'intéresse au domaine des calculs haute performance, et plus particulièrement à l'interfaçage à une même plateforme de plusieurs solutions de calcul intensif présentant différentes logiques métier. L'invention concerne notamment un procédé de gestion d'autorisation accordées à un client utilisateur dans le cadre d'une plateforme centralisant l'accès à une pluralité de solutions de calcul intensif. En outre, l'invention concerne un système de gestion d'autorisation capable de gérer les autorisations accordées à un client utilisateur dans le cadre d'une plateforme centralisant l'accès à une pluralité de solutions de calcul intensif.

### [Art antérieur]

Le calcul haute performance, aussi appelé HPC (« High Performance Computing » en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en œuvre par des clusters. L'objectif de ces clusters est de dépasser les limites du matériel existant en mutualisant des ressources pour permettre l'exécution parallélisée d'instructions et l'agrégation de capacité mémoire et de disque. Un cluster, est un ensemble de moyens de calcul (aussi appelés nœuds ou serveurs) interconnectés par un réseau d'interconnexion pouvant réaliser des opérations communes. Le calcul à haute performance (HPC) est adopté par de plus en plus de scientifiques pour les aider à résoudre des problèmes complexes. En particulier, avec une augmentation entre 2017 et 2018 de plus de 50% de la puissance de l'ordinateur le plus puissant au monde, la puissance de calcul des supercalculateurs augmente sans cesse. De plus, il existe un nombre croissant de centres de calcul (locaux, régionaux, nationaux et internationaux) dotés de systèmes de classe pétaflopique. Etant donné qu'il n'est pas possible pour tous les utilisateurs d'investir dans les architectures informatiques capables de déployer de telles puissances de calcul, certains se sont spécialisés dans la fourniture d'accès à ces solutions de calcul haute performance.

Ainsi, ces dernières années ont vu l'apparition de plateformes d'accès à des solutions de calcul intensif (EP3109759). En particulier, de nombreux portails HPC ont été développés. Les portails internet sont une voie commune pour accéder à l'information et aux services disponibles sur les réseaux informatiques. Les portails offrent souvent un point d'accès unique aux données et aux applications. En outre, un portail peut présenter une vue unifiée et personnalisée d'informations aux utilisateurs.

De nombreux projets HPC développent leur propre portail Web spécifique à une communauté et certains fournisseurs de cloud HPC ont développé des portails Web pour leur propre usage. Les relations entre le portail et ces systèmes d'information et de stockage sont essentielles mais complexes à mettre en œuvre de manière sécurisée et efficace. Les données traitées dans des environnements HPC peuvent être très confidentielles (en particulier pour les industries ou les organismes financiers). Les portails HPC doivent gérer ces contraintes dans la manière dont ils exécutent les services sur le serveur principal (via l'emprunt d'identité, c'est-à-dire qu'ils exécutent le service « en tant que » utilisateur authentifié), ainsi que dans la manière dont ils affichent ou filtrent les informations dans le portail HPC.

De plus, au-delà de la puissance de calcul et du calcul haute performance, les scientifiques utilisateurs souhaitent pouvoir accéder à des solutions de calcul intensif tels que des machines quantiques, de la simulation quantique, des plateformes de « Deep Learning » ou plus largement dédiées au développement de solutions d'intelligence artificielle.

Néanmoins, chacune de ces solutions est hébergée ou rendue accessible par des sociétés dédiées à l'une ou l'autre de ces technologies et l'utilisation notamment simultanée de ces différentes solutions de calcul intensif devient laborieuse.

Ainsi, avec la multiplication des types de solutions de calcul intensif et la complémentarité de certaines de ces solutions, il apparait nécessaire de pouvoir disposer d'une plateforme permettant d'accéder indifféremment à différentes solutions de calcul intensif et cela de manière sécurisée.

### [Problème technique]

L'invention a donc pour but de remédier aux inconvénients de l'art antérieur. En particulier, l'invention a pour but de proposer un procédé de gestion d'autorisations accordées à un client utilisateur, notamment dans le cadre d'une gouvernance unifiée d'une pluralité de solutions de calcul intensif, ledit procédé permettant d'implémenter efficacement une matrice de droits complexe. L'invention a en outre pour but de proposer un système informatique de gestion d'autorisations accordées à un client utilisateur à partir d'une interface agrégée. Un tel système permet un double interfaçage unifié portant à la fois sur un socle d'interface utilisateur (« frontends » en terminologie anglosaxonne) unifiés et l'interfaçage unifié des logiques métiers aux plateformes d'arrière-plan (« backends » en terminologie anglosaxonne) de différents domaines du calcul intensif.

### [Brève description de l'invention]

A cet effet, l'invention porte sur un procédé de gestion d'autorisations accordées à un client utilisateur à partir d'une interface agrégée dans le cadre d'une gouvernance unifiée d'une pluralité de solutions de calcul intensif, lesdites solutions de calcul intensif comportant au moins deux solutions sélectionnées parmi : un serveur de calcul haute performance, un serveur dédié à l'apprentissage supervisé ou non supervisé, et un serveur dédié aux calculs quantiques ; la gouvernance unifiée étant assurée au moins en partie par un système informatique de gestion d'autorisations comportant : un microservice mandataire, un microservice de sécurité à jeton, au moins un référentiel de sécurité, au moins un référentiel d'autorisations, et au moins un microservice de calcul pour chacune des solutions de calcul intensif ; ledit procédé de gestion comportant les étapes de :
- Réception, par le microservice de sécurité à jeton, d'informations d'accès d'un client utilisateur,
- Authentification du client utilisateur et détermination, par le microservice de sécurité à jeton, d'au moins un attribut de rôle pour le client utilisateur à partir des informations de commande d'accès et de données mémorisées dans le référentiel de sécurité,
- Génération d'un jeton, par le microservice de sécurité à jeton, ledit jeton permettant un accès à toutes les solutions de calcul intensif accessibles audit client utilisateur en fonction de l'au moins un attribut de rôle déterminé, et
- Détermination d'autorisations accordées au client utilisateur, par l'au moins un microservice de calcul, ladite détermination étant basée sur l'au moins un attribut de rôle déterminé et des données contenues dans l'au moins un référentiel d'autorisations.

Le procédé selon l'invention est mis en œuvre dans le cadre d'une gouvernance unifiée d'une pluralité de solutions de calcul intensif permettant d'exposer, selon un modèle unique, des modèles et domaines d'applications de calcul intensif ou haute performance très variés : Calcul Parallèle Haute Performance, Intelligence Artificielle, Apprentissage Profond et simulation de calcul quantique. Cette gouvernance unifiée permet une convergence générale de domaines divers cherchant à exploiter la puissance et la souplesse des grappes de calcul (clusters) ou des supercalculateurs ainsi que leur utilisation en nuage.

Les plateformes existantes pour l'accès à des solutions de calculs intensifs sont spécialisées sur une méthode de calcul particulière et les architectures logicielles concernées ne sont pas en mesure de gérer la complexité d'interaction avec plusieurs solutions de calculs intensif.

De même, alors que les microservices sont utilisés dans de nombreux domaines de l'informatique, ils n'ont pas été proposés dans une architecture singulière capable d'agréger des données provenant ou à destination de solutions de calculs intensifs différentes présentant chacune leurs spécificités. En effet, en absence d'une structure adaptée, il n'est pas évident de concevoir une architecture capable de gérer les spécificités de chacune de solutions de calcul intensif tout en les coordonnant à partir d'un point unique. Ainsi, les solutions actuelles ne sont pas capables de gérer les ordonnanceurs de plusieurs solutions de calcul intensif et des flux de traitement représentant des charges systèmes très hétérogènes sur du matériel tout autant hétérogène. De même, les architectures, à base exclusivement de microservices, proposées dans d'autres domaines de l'informatique ne sont pas applicables à une solution devant agréger plusieurs solutions de calcul intensif.

Par ailleurs, un microservice correspond par définition à un service pouvant « tenir » dans une machine virtuelle ou un conteneur, ces deux objets ne pouvant jamais allouer plus de ressources physiques que le serveur (nœud) physique qui les héberge. Inversement, un seul travail de calcul scientifique, en particulier pour une application parallèle à mémoire distribuée (le cas le plus important), agrège la puissance de plusieurs dizaines, centaines ou milliers de ces serveurs (nœuds) physiques. Il s'apparente a contrario à un macro-travail et se trouve ainsi en opposition totale avec les divers modèles de virtualisation ayant permis de populariser l'approche microservice.

Enfin, la plupart des applications de calcul scientifique, en particulier sur le domaine très large des métiers utilisant la simulation numérique, ont été développées sur des modèles très anciens (20, 30 ans voire plus), totalement inadaptés à un mode connecté, orchestré ou basé sur de la découverte dynamique. Ces applications sont pour la plupart non intégrables dans un framework microservices. L'idée est ici de développer l'ensemble des intergiciels à l'état de l'art, eux-mêmes sous la forme de microservices, pour piloter sur une ou plusieurs infrastructures hautes performances un grand nombre d'applications ne pouvant elles-mêmes se conformer à ce modèle.

La présente invention permet de pallier cela grâce à une utilisation complémentaire de microservices de calcul chacun dédié à une solution de calcul intensif coopérant avec un microservice mandataire et une interface agrégée.

En particulier, le procédé selon l'invention permet une gestion fine des autorisations dans le cadre d'une interface agrégeant l'accès à plusieurs solutions de calcul intensif.

Le procédé selon l'invention permet une authentification unique pour tous les microservices avec une gestion unique des rôles et des identités. Pour cela, une partie de la vérification de sécurité de la gouvernance unifiée dans un environnement d'exécution est avantageusement effectuée par microservice de sécurité à jeton du système informatique de gestion d'autorisations. En particulier, la sécurité est assurée via un cadre d'autorisation pouvant s'appuyer sur une gestion de rôles, une gestion des politiques d'autorisations, un mécanisme de contrôle basé sur des jetons, une délégation de la gestion des identités et une délégation des mécanismes d'authentification.

De plus, outre le fait de fournir une interface agrégée permettant d'intégrer plusieurs solutions de calcul intensif et les rendre compatibles avec les produits logiciels classiques, la présence des différentes couches d'abstraction sous forme de microservices permet une normalisation des échanges et normalisation des vues (interfaces).

Un tel procédé permet de coupler une authentification très flexible et générique (assurée par le microservice de sécurité) et très précise (assurée par chacun des microservices de solution de calcul intensif). En effet, le microservice de sécurité à jeton permet d'attribuer un rôle mais il n'est pas en mesure de réaliser une attribution fine d'autorisations à chacune des fonctionnalités des différentes solutions de calcul intensif. Le microservice de sécurité à jetons est alors par exemple complété par un catalogue d'autorisations spéciales dans les microservices de calcul. Ce catalogue peut être implémenté comme une table dans la base de données du backend (soit dans son propre microservice, soit dans un microservice dédié).

Ainsi, le procédé selon l'invention permet une gestion d'autorisations dans le cadre d'une solution proposant un point d'entrée unique vers les logiques métier (backends) différentes et cela avec une ergonomie unifiée (e.g. boutons, menus, logiques de workflows... normalisés)

**Selon d'autres caractéristiques optionnelles du procédé :**
- les informations d'accès d'un client utilisateur proviennent d'un message envoyé depuis une interface agrégée du client utilisateur au microservice mandataire. Ainsi, l'information transite par le microservice mandataire au sein duquel elle pourra être mémorisée. Alternativement, les informations d'accès d'un client utilisateur proviennent d'un message envoyé depuis une interface agrégée du client utilisateur directement au microservice à jetons. Cela permet de simplifier la procédure d'autorisation.
- le message provenant du client utilisateur comporte des données d'identification du client utilisateur. Cela permet de déterminer à partir de quel dispositif matériel la connexion est requise.
- la génération d'un jeton par le microservice de sécurité à jeton comporte l'accès à une pluralité d'annuaires, de préférence à au moins des annuaires de type LDAP (« Lightweight Directory Access Protocol » en terminologie anglosaxonne), Active Directory® et Kerberos®. La pluralité de possibilités offertes permet de conférer une forte adaptabilité au procédé selon l'invention.
- le jeton généré est un jeton de connexion persistant et il permet une authentification et une attribution de rôle au client utilisateur pour tous les microservices de calculs de l'infrastructure informatique sans qu'il y ait besoin de s'identifier à nouveau.
- l'étape de détermination d'au moins un attribut de rôle pour le client utilisateur comporte l'attribution d'un rôle partagé par tous les microservices de calculs. Ainsi, la procédure d'autorisation en est facilitée.
- l'étape de détermination d'au moins un attribut de rôle pour le client utilisateur comporte l'attribution d'un rôle spécifique à au moins un microservice de calcul.
- l'étape de détermination d'au moins un attribut de rôle pour le client utilisateur est réalisée à partir des informations de commande d'accès et de données mémorisées dans un référentiel de sécurité.
- il comporte une étape de modification de l'interface agrégée en fonction d'autorisations accordées au client utilisateur.
- il comporte une étape de planification des taches comportant la détermination par au moins un microservices de calcul d'une quantité de ressource d'une solution de calcul qui sera attribuée à une tache donnée.

D'autres mises en œuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

Ainsi, l'invention porte en outre sur un système informatique de gestion d'autorisations accordées à un client utilisateur à partir d'une interface agrégée dans le cadre d'une gouvernance unifiée d'une pluralité de solutions de calcul intensif, lesdites solutions de calcul intensif comportant au moins deux solutions sélectionnées parmi : un serveur de calcul haute performance, un serveur dédié à l'apprentissage supervisé ou non supervisé, et un serveur dédié aux calculs quantiques ; ledit système informatique de gestion d'autorisations comportant :
- un microservice mandataire configuré pour recevoir des informations d'accès d'un client utilisateur ;
- un microservice de sécurité à jeton configuré pour recevoir les informations d'accès d'un client utilisateur reçues par le microservice mandataire, pour authentifier le client utilisateur et pour déterminer au moins un attribut de rôle pour le client utilisateur à partir des informations d'accès et de données mémorisées dans un référentiel de sécurité, ledit microservice de sécurité à jeton étant en outre configuré pour générer un jeton, ledit jeton permettant un accès à toutes les solutions de calcul intensif accessibles audit client utilisateur en fonction de l'au moins un attribut de rôle déterminé ;
- au moins un microservice de calcul pour chacune des solutions de calcul intensif, l'au moins un microservice de calcul étant configuré pour déterminer des autorisations accordées au client utilisateur, ladite détermination étant basée sur l'au moins un attribut de rôle déterminé et des données contenues dans un référentiel d'autorisations.

Un tel système informatique permet une gestion de la sécurité unifiée (identification, authentification, autorisation) avec une gestion des droits d'accès aux services transparente au niveau des microservices de calcul.

**Selon d'autres caractéristiques optionnelles du système informatique :**
- le microservice de sécurité à jeton est configuré pour accéder à une pluralité d'annuaires, de préférence à au moins des annuaires de type LDAP, Active Directory® et Kerberos®. La pluralité de possibilité offerte est permise par la structure du système et permet de conférer une forte adaptabilité à l'invention.
- il comporte un complément permettant de prendre en compte des politiques d'autorisation spécifiques à chaque microservice (logique métier), cela permettant une normalisation des échanges entre le microservice mandataire et le microservice de sécurité à jeton. Cela permet de conférer une grande finesse à la gestion des autorisations malgré la gestion de solutions de calcul intensif très différentes. Le complément peut par exemple prendre la forme d'un logiciel.
- le microservice de sécurité à jeton est configuré de façon à pouvoir attribuer des rôles partagés ou des rôles spécifiques, de préférence il est configuré de façon à pouvoir attribuer un rôle partagé par tous les microservices de calculs. Cela permet de conférer une grande finesse à la gestion des autorisations malgré la gestion de solution de calcul intensif très différentes.
- les microservices de calcul sont sélectionnées parmi : un microservice relié à un serveur de calcul haute performance, un microservice relié à un serveur dédié à l'apprentissage supervisé ou non supervisé, et un microservice relié à un serveur dédié aux calculs quantiques, en particulier aux simulations de calcul quantique.
- le microservice de sécurité à jeton est hébergé sur un ou plusieurs dispositifs informatiques différents, distincts du ou des dispositifs informatiques hébergeant le microservice mandataire et/ou les microservices de calcul.

D'autres avantages et caractéristiques de l'invention apparaitront à la lecture de la description suivante donnée à titre d'exemple illustratif et non limitatif, en référence aux Figures annexées :
Figure 1 représente un schéma d'un système informatique de gestion d'autorisations accordées à un client utilisateur selon l'invention.
Figure 2 représente une illustration schématique d'un procédé de gestion d'autorisations accordées à un client utilisateur selon l'invention.
Figure 3 représente un schéma d'un système informatique de gestion d'autorisations accordées à un client utilisateur selon un mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuent des combinaisons de matériel spécial et d'instructions informatiques.

### [Description de l'invention]

Dans la suite de la description, l'expression « **gestion d'autorisations** » correspond au sens de l'invention à la capacité de gérer, en fonction de règles prédéterminées, l'accès aux solutions de calcul intensif d'une part et les droits d'utilisateurs sur ces solutions tels que lecture, écriture, copie, exécution, modification, et contrôle total. En général, l'autorisation englobe les politiques de permissions, la gestion des accès, des identités et l'authentification.

L'expression « **solution de calcul intensif** » correspond de préférence à des infrastructures informatiques capable d'exécuter des calculs intensifs ou hautes performances tels que : Calcul Parallèle Haute Performance, Intelligence Artificielle, Apprentissage Profond, calcul quantique et simulation de calcul quantique. Le calcul quantique fait référence largement à toute solution de calcul utilisant des effets quantiques afin de trouver des solutions aux problèmes de calcul.

Le terme « **microservice** » correspond à une chaine applicative comportant généralement une pluralité d'applications capables d'exécuter une ou plusieurs taches. Les microservices peuvent être reliés entre eux par l'intermédiaire d'API tel qu'une API REST. La présence dans le cadre de l'invention de microservices permet de conférer une forte modularité et évolutivité à la solution notamment au regard de l'implication de solutions de calcul intensif potentiellement très différentes.

Le terme « **portlet** » peut désigner des composants logiciels d'interface utilisateur connectables qui sont gérés et affichés dans un portail web. Une page de portail peut être affichée comme une collection de fenêtres de portlet ne se chevauchant pas, où chaque fenêtre de portlet affiche un portlet. Par conséquent, un portlet (ou d'une collection de portlets) ressemble à une application basée sur le Web qui est hébergé dans un portail.

L'expression « **Portail web** » ou plus simplement « **Portail** » peut désigner un outil d'accès pour accéder à différents types d'informations et d'applications via un système client à partir des ressources du réseau. Un outil pour afficher une page de portail peut être un navigateur Web. Cependant, un portail peut également être intégré dans d'autres applications. Les portails au sens de l'invention sont avantageusement capables de présenter des données de plusieurs sources telles que des applications Web dans une seule interface agrégée Web ou d'un navigateur. En outre, un portail offre la possibilité d'afficher des portlets dans l'interface agrégée. La configuration du portail peut inclure une définition de portail avec par exemple un fichier incluant le langage de balisage extensible (XML), les fichiers de définition de portlet pour tous les portlets associés avec le portail, les pages de serveur Java (JSP), les descripteurs d'applications Web, des images telles que les fichiers de format d'échange graphique (GIFs), les descripteurs de déploiement, les fichiers de configuration, les fichiers d'archive Java (JAR) qui contiennent des instructions logiques et de mise en forme pour l'application de portail, et tous les autres fichiers nécessaires pour une application de portail souhaitée.

Le terme « **requête** » peut désigner une demande d'information, généralement identifiée par un « lien » sur une page portail. Une demande peut être initiée par un « clic » sur un symbole affiché associé au « lien ».

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Le terme « **agrégé** » ou « **agrégation** » peut correspondre au fait de présenter en un seul et même emplacement des données provenant de plusieurs origines différentes. L'agrégation peut également correspondre à la création d'une nouvelle donnée à partir d'au moins deux données différentes. Par exemple, cela peut correspondre à une durée totale avant complétude d'un projet de calcul, ladite durée totale prenant en compte la durée avant complétude sur un premier serveur de calcul intensif et la durée avant complétude sur un second serveur de calcul intensif, les deux durées n'étant pas simplement additionnées.

L'expression « **interface agrégée** » ou « **interface d'agrégation** » peut désigner au sens de l'invention une interface homme-machine graphique bénéficiant d'un procédé de collecte et d'agrégation d'informations provenant des solutions de calcul intensif. En outre, une interface agrégée peut bénéficier de l'organisation des informations selon l'une des caractéristiques de l'écran affichant ladite interface.

Le terme « **côté client** » peut désigner des activités qui peuvent être effectuées sur un client dans un environnement de réseau client - serveur. En conséquence, on peut indiquer les activités qui peuvent être exécutées le terme « du côté serveur » sur un serveur dans un environnement de réseau de serveur de client.

Le terme « **pluralité** » au sens de l'invention correspond à au moins deux. De préférence cela peut correspondre à au moins trois, de façon plus préférée au moins cinq et de façon encore plus préférée au moins dix.

On entend par « **traiter** », « **calculer** », « **exécuter** », « **déterminer** », « **afficher** », **« extraire** », « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

Dans la suite de la description, les mêmes références sont utilisées pour désigner les mêmes éléments.

Comme cela a été mentionné, il existe de nombreuses solutions de calcul intensif disponibles et accessibles aux utilisateurs ponctuels. Néanmoins, il n'existe pas de plateforme permettant d'unifier l'accès à une pluralité de solution de calcul intensif de façon homogène, transparente et sécurisée.

Les inventeurs ont donc proposé un système informatique, ci-après dénommé « système informatique de gestion d'autorisations », et permettant, via l'utilisation d'une pluralité de microservices, une gouvernance unifiée et une interface agrégée pour l'accès à une variété de services de fournisseurs tiers de solutions de calcul intensif.

Les solutions de calcul intensif nécessitent généralement la gestion d'autorisations fines permettant de bien compartimenter les autorisations en fonction des utilisateurs. De façon à proposer une gouvernance unifiée de solution de calcul intensif fonctionnelle et ayant un niveau de sécurité élevé, les inventeurs ont divisé la gestion des autorisations entre plusieurs entités.

Une première entité, un microservice de sécurité à jetons, est en charge de la gestion des fonctionnalités de sécurité et d'authentification pour sécuriser le système telles que l'authentification des utilisateurs et/ou des développeurs, la fourniture de différents niveaux d'accès au système basée sur les informations d'identification de sécurité des utilisateurs et/ou des développeurs. Une ou plusieurs secondes entités, telles que des microservices de calcul, sont en charge de l'attribution des autorisations. Ainsi, les procédés et systèmes développés par les inventeurs permettent de coupler authentification souple et robuste avec attribution des autorisations fine et aisément évolutive.

L'invention porte donc sur un **procédé 100 de gestion d'autorisations accordées à un client utilisateur 2.** La gestion d'autorisations permettra grâce au procédé selon l'invention un accès aux solutions de calcul intensif pour lesquelles le client utilisateur 2 dispose d'un abonnement et seulement à ces solutions de calcul intensif. En outre, comme cela a été évoqué, il est avantageux de pouvoir bénéficier d'une attribution fine d'autorisations permettant de définir finement les autorisations d'un client utilisateur donné.

Avantageusement, un procédé 100 de gestion d'autorisations selon l'invention est mis en œuvre à partir d'une interface agrégée 10. En outre, l'interface agrégée 10 est avantageusement composée d'une pluralité de portlet 11,12,13, chaque portlet pouvant être associé indirectement à une des solutions de calcul intensif 71,72,73.

De plus, un tel procédé est mis en œuvre dans le cadre d'une gouvernance unifiée d'une pluralité de solutions de calcul intensif 70. Les solutions de calcul intensif 70 dans le cadre de la présente invention sont par exemple sélectionnées parmi : un serveur de calcul haute performance 71, un serveur dédié à l'apprentissage supervisé ou non supervisé 72, et un serveur dédié aux calculs quantiques 73, en particulier aux simulations de calcul quantique. En particulier, un serveur dédié à l'apprentissage supervisé ou non supervisé 72 peut être un serveur dédié à l'apprentissage profond supervisé ou non supervisé. De façon préférée, les solutions de calcul intensif pour lesquelles la gestion d'autorisations est mise en œuvre comportent au moins deux des solutions listées ci-dessus, de façon plus préférée au moins trois des solutions listées ci-dessus.

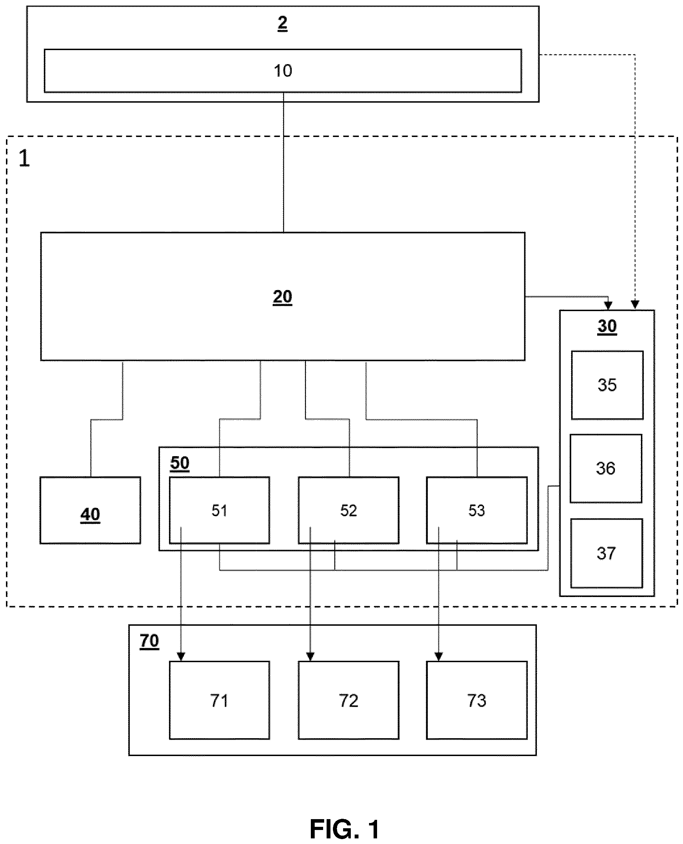

En particulier, comme cela est illustré à la **figure 1** et comme cela sera décrit par la suite, le procédé de gestion d'autorisations et en particulier la gouvernance unifiée peuvent être assurés par un système informatique 1 comportant : un microservice mandataire 20, un microservice de sécurité à jeton 30, au moins un référentiel de sécurité 35, 36, 37, au moins un référentiel d' autorisations 40, et au moins un microservice de calcul 50, 51, 52, 53 pour chacune des solutions de calcul intensif. Les microservices de calcul 50 dans le cadre de la présente invention sont par exemple sélectionnées parmi : un microservice 51 relié à un serveur de calcul haute performance 71, un microservice 52 relié à un serveur dédié à l'apprentissage supervisé ou non supervisé 72, et un microservice 53 relié à un serveur dédié aux calculs quantiques 73, en particulier aux simulations de calcul quantique.

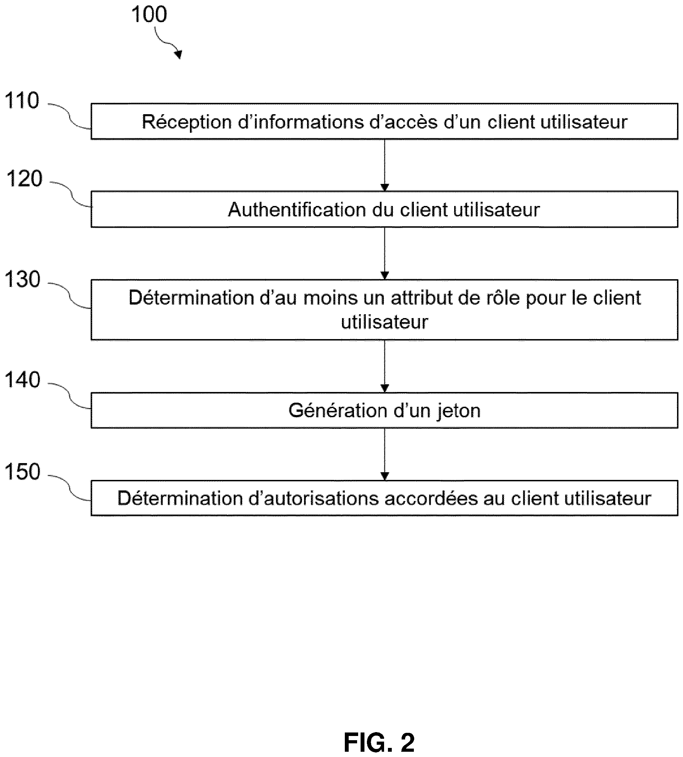

Comme cela est illustré à la **figure 2****,** le procédé 100 de gestion selon l'invention comporte les étapes de réception 110 d'informations d'accès d'un client utilisateur 2, d'authentification 120 du client utilisateur 2, de détermination 130 d'au moins un attribut de rôle pour le client utilisateur 2, de génération 140 d'un jeton, et de détermination 150 d'autorisations accordées au client utilisateur 2.

En outre, un procédé 100 de gestion selon l'invention peut comporter des étapes de soumission de travaux, surveillance des travaux, suspension et reprise des travaux et modification des paramètres du travail.

Avantageusement, un procédé 100 de gestion selon l'invention peut comporter une étape de modification de l'interface agrégée en fonction d'autorisations accordées au client utilisateur. En effet, une fois identifié, le client utilisateur pourra bénéficier de nouvelles fonctionnalités et donc d'une interface agrégée cohérente avec ces fonctionnalités.

Plus particulièrement, le procédé de gestion d'autorisations selon la présente invention comporte une **réception 110 d'informations d'accès d'un client utilisateur 2.**

De façon préférée, au moins une partie des informations d'accès sont générées au niveau de l'interface agrégée 10 du client utilisateur 2.

En particulier, la réception peut être faite par le microservice de sécurité à jeton 30. Néanmoins, de façon préférée, ces informations sont transférées du client utilisateur directement ou indirectement au microservice mandataire 20, puis le microservice mandataire 20 transfère alors ces informations d'accès modifiées, ou non, au microservice de sécurité à jeton 30.

Les informations d'accès peuvent par exemple prendre la forme d'un message provenant du client utilisateur comportant des données d'identification du client utilisateur 2.

Le procédé de gestion d'autorisations selon la présente invention comporte **une authentification 120 du client utilisateur 2.**

L'authentification peut par exemple être réalisée par tout module capable de mettre en œuvre un protocole d'authentification unique (SSO pour « Single Sign On » en terminologie anglosaxonne). Différents protocoles peuvent être utilisés pour réaliser l'authentification du client utilisateur 2. De façon préférée, l'authentification 120 du client utilisateur 2 se fait selon un protocole sélectionné parmi OAuth, protocole connu permettant à une application tierce d'accéder à un service web, et SAML, pour « Security assertion markup language » selon une terminologie anglo-saxonne, concernant un standard informatique définissant un protocole pour échanger des informations liées à la sécurité et permettant l'authentification unique d'un utilisateur.

Avantageusement, l'authentification 120 du client utilisateur 2 n'est pas réalisée par le microservice mandataire 20. De façon plus préférée, l'authentification est réalisée par un microservice de sécurité à jeton 30. Il y a ainsi une délégation, par le microservice mandataire 20, du contrôle d'identification, d'authentification et d'attribution de rôle au microservice de sécurité à jeton 30.

En particulier, le microservice de sécurité à jetons 30 est configuré pour accéder à une pluralité d'annuaire ou référentiels de sécurité 35, 36, 37, de préférence à au moins des annuaires de type LDAP, pour « Lightweight Directory Access Protocol » selon une terminologie anglo-saxonne, Active Directory et Kerberos. Le référentiel de sécurité 35,36,37 peut correspondre à un support de stockage de clés et/ou de jetons, telle qu'une base de données, un fichier de données ou tout autre système de stockage sécurisé dans une mémoire. C'est généralement un support sécurisé permettant de stocker les noms, mots de passe, rôles et autorisations des utilisateurs. De préférence, il comporte une matrice de rôle et une matrice de souscription.

En outre, le microservice de sécurité à jeton 30 met avantageusement en œuvre un protocole de type OAuth et en particulier de type OAuth 2.0.

De façon préférée, bien que le microservice de sécurité à jeton 30 fasse partie d'un système 1 informatique de gestion selon l'invention, il est avantageusement hébergé sur un ou plusieurs dispositifs informatiques (e.g. serveurs) différents, distincts du ou des dispositifs informatiques hébergeant le microservice mandataire 20 et/ou les microservices de calcul 50, 51, 52, 53.

Il existe de nombreuses variantes possibles dans la mise en œuvre de l'authentification 120 du client utilisateur 2. Avantageusement, le microservice de sécurité à jeton 30 peut fournir une très grande variété de protocole d'authentification mais n'est pas en mesure de fournir des contrôles de sécurité à grains fins optimisés. Pour remédier à cette situation, les inventeurs ont proposés une délégation uniquement d'un sous ensemble de contrôle au microservice de sécurité à jeton 30. Si le microservice de sécurité à jeton 30 ne peut pas fournir des contrôles de sécurité suffisamment fins pour des solutions de calcul intensif, ces contrôles seront confiés aux microservices de calcul.

En outre, le microservice mandataire peut enregistrer des informations fournies par le client utilisateur sur une bibliothèque de journalisation et stocker ces informations dans une base de données.

L'authentification 120 du client utilisateur 2 peut aussi correspondre à une authentification d'un client développeur. Avantageusement, le microservice de sécurité à jeton 30 sera invoqué à chaque fois qu'un tiers contactera le microservice mandataire et nécessitera une authentification.

Ainsi, un procédé de gestion d'autorisations selon la présente invention comporte une **détermination 130 d'au moins un attribut de rôle pour le client utilisateur 2.**

De façon préférée, la détermination 130 est réalisée par le microservice de sécurité à jeton 30. La détermination 130 d'au moins un attribut de rôle pour le client utilisateur 2 est par exemple réalisée à partir des informations de commande d'accès et de données mémorisées dans un référentiel de sécurité 35,36,37.

Une fois le client utilisateur authentifié, le procédé selon l'invention va permettre la génération d'un jeton permettant un accès temporaire à des ressources gérées par les microservices de calcul. En particulier, le procédé selon l'invention repose sur des autorisations contrôlées via des rôles ou attributs de rôle préalablement déterminés.

Sur la base de règles prédéterminée, un rôle est sélectionné pour un client utilisateur 2 et inscrit dans un jeton d'identification du client utilisateur.

Le jeton peut par exemple prendre la forme d'un jeton JWT (« JSON Web Token » en terminologie anglosaxonne). Il contient les demandes sur l'identité du client utilisateur authentifié. Alternativement, le procédé selon l'invention peut mettre en œuvre un jeton de type PASETO (« Platform-Agnostic Security Tokens » en terminologie anglosaxonne), un jeton de type Branca ou encore un jeton de type Macaroons (Cookies avec mises en garde contextuelles pour l'autorisation décentralisée dans le cloud selon Google®).

De façon préférée, l'authentification 120 et la détermination 130 d'au moins un attribut de rôle pour le client utilisateur 2 est réalisée conformément au protocole OAuth 2.0.

En particulier, le microservice de sécurité à jeton 30 traite un message du microservice mandataire 20 et extrait la demande d'accès. Le microservice de sécurité à jeton 30 compile ensuite la liste des droits d'accès accordés pour le client utilisateur 2 et demande un jeton de sécurité pour les droits accordés.

Un jeton est alors généré et transmis au microservice mandataire 20 qui le transmet à son tour au client utilisateur.

Un procédé de gestion d'autorisations selon la présente invention comporte une **génération 140 d'un jeton.** En particulier, ce jeton généré permet un accès à toutes les solutions de calcul intensif accessibles (i.e. pour lesquelles le client utilisateur dispose des autorisations) audit client utilisateur 2 en fonction de l'au moins un attribut de rôle déterminé.

Néanmoins, ce jeton ne permet pas généralement de définir finement les autorisations accordées au client utilisateur 2 pour une ou plusieurs solutions de calcul intensif. De façon plus préférée, le jeton généré comporte des droits d'accès à une ou plusieurs solutions de calcul intensif ainsi qu'une caractéristique de rôle du client utilisateur 2.

Un procédé de gestion d'autorisations selon la présente invention comporte alors une **détermination 150 d'autorisations accordées au client utilisateur 2.**

Avantageusement, la détermination d'autorisations est basée sur l'au moins un attribut de rôle déterminé et des données contenues dans un référentiel d'autorisations 40.

La détermination d'autorisations 150 peut par exemple être réalisée par le microservice mandataire ou un microservice de calcul.

De façon préférée, la détermination 150 d'autorisations est réalisée par au moins un microservice de calcul 50, 51, 52, 53.

A titre d'exemple, une solution de calcul intensif peut présenter plus de 50 fonctionnalités qui doivent être multipliées par une distribution en fonction des rôles de l'utilisateur et des solutions. Ainsi, c'est généralement plusieurs centaines d'autorisations qui doivent être gérées. Dans le cadre de l'invention, un microservice de calcul est donc avantageusement couplé à un catalogue d'autorisations ou référentiel d'autorisation 40.

Ce catalogue ou référentiel d'autorisation 40 peut être implémenté comme une table dans la base de données du backend (soit dans son propre microservice, soit dans un microservice dédié).

Ainsi, au moins une partie du contrôle d'accès et de gestion d'autorisations est mise en œuvre au niveau de chacun des microservices de calcul.

Grâce à cela il sera possible de répondre aux besoins d'autorisations très fines des solutions de calcul intensif tout en assurant un haut niveau de sécurité fourni par l'utilisation de jetons d'authentification.

Il existe des planificateurs ou ordonnanceurs permettant, au sein d'un ensemble de ressources réservées, de répartir les taches de calcul entre les moyens de calcul et de les ordonner. Néanmoins, ces procédés et dispositifs n'interviennent qu'une fois que les moyens de calcul ont été alloués et ne permettent pas à un opérateur de rapidement identifier les nœuds à allouer.

Ainsi, le procédé selon l'invention peut également comporter une étape de planification des taches. En effet, le procédé selon l'invention s'applique à une gouvernance unifiée d'une pluralité de solution de calcul intensif et il peut avantageusement comporter une étape au cours de laquelle des instructions reçues par le microservice mandataire 20 pourront être traitées de façon à organiser leur exécution optimale par les différentes solutions de calcul intensif disponibles.

De façon préférée, l'étape de planification des taches comporte une mise à jour d'une file d'attente par chacun des microservices de calcul 50, 51, 52, 53. En particulier, la mise à jour de la file d'attente peut prendre en compte une valeur d'indice de priorité transmise par le client utilisateur 2.

L'étape de planification des taches peut également comporter la détermination par au moins un microservices de calcul d'une quantité de ressource d'une solution de calcul qui sera attribuée à une tache donnée.

En outre, l'étape de planification des taches pourra comporter la transmission de données de paramétrage à la solution de calcul intensif en charge de l'exécution d'une tache donnée. Les données de paramétrages pourront par exemple correspondre à un ou plusieurs fichiers d'entrée, ou encore à un réglage spécifique à la solution de calcul intensif.

De façon préférée, l'étape de planification des taches pourra aussi comporter lors de l'initiation d'une tache, la transmission de données de paramétrage d'environnement telles que des identifiants des répertoires de travail à utiliser, les chemins d'accès aux données ou encore les bibliothèques à utiliser.

En outre, l'étape de planification pourra comporter :
- une surveillance des taches (i.e. travaux) incluant la détermination de l'état d'avancement des travaux, l'enregistrement de journaux d'application, l'enregistrement de fichiers de résultats, la détermination de quantités de ressources utilisées, la détermination d'une valeur de crédit utilisée,
- Une clôture ou une suspension des travaux,
- Une reprise des travaux suspendus,
- Une modification des paramètres des travaux.

De façon préférée, le procédé selon l'invention peut comporter une segmentation automatisée d'une tache en une pluralité de sous-taches attribuées à plusieurs solutions de calcul intensif différentes. Alternativement, un utilisateur peut par l'intermédiaire de l'interface d'agrégation définir la répartition de sous taches d'un même projet au travers de plusieurs solutions de calcul intensif. Ces sous-taches pourront être exécutées en série ou en parallèle en fonction de leurs spécificités.

**Selon un autre aspect,** l'invention porte sur un **système 1 informatique de gestion d'autorisations accordées à un client utilisateur 2** à partir d'une interface agrégée 10 dans le cadre d'une gouvernance unifiée d'une pluralité de solutions de calcul intensif 70.

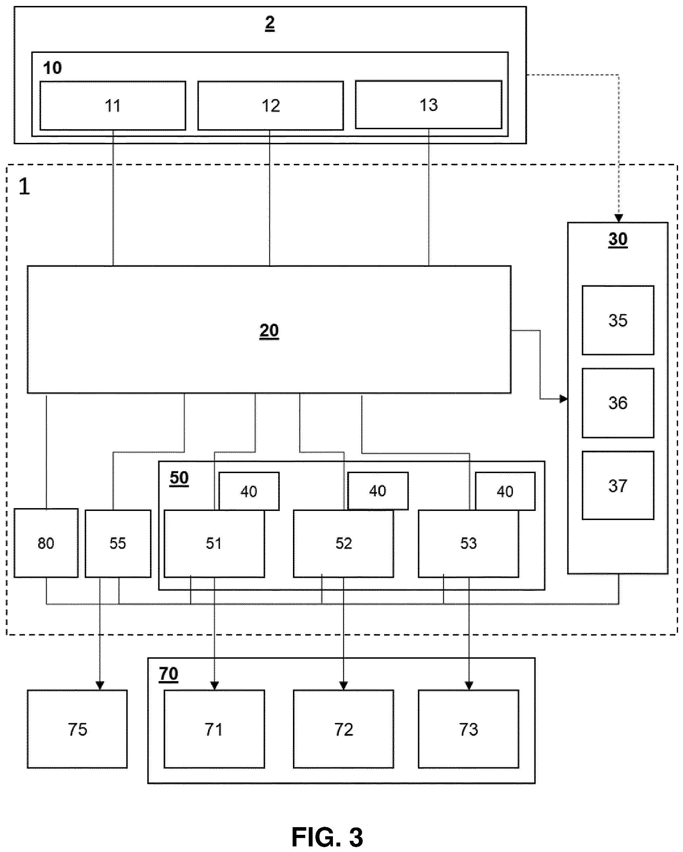

En particulier, un système 1 informatique de gestion d'autorisations selon l'invention peut comporter : un microservice mandataire 20, un microservice de sécurité à jeton 30, au moins un référentiel de sécurité 35,36,37 au moins un microservice de calcul 50, 51, 52, 53 et un référentiel d'autorisation 40. Le système 1 informatique de gestion d'autorisations pourra comporter un ou plusieurs référentiels d'autorisation 40 comme cela est présenté à la figure 3. En effet, chaque microservice de calcul 51,52,53 peut être associé à un référentiel d'autorisation 40.

En outre, comme cela est présenté à la **figure 3** un exemple de schéma de principe d'un système 1 informatique de gestion d'autorisations selon l'invention peut également comporter : un serveur 80 de visualisation distante, de préférence un serveur de visualisation 3D distante.

Considérant l'implémentation du système selon l'invention, celui-ci peut être hébergé par un ou plusieurs serveurs informatiques. Il comporte en particulier un ensemble de microservices tels que des microservices mis en œuvre selon des protocoles de codage de type node.js ou d'autres technologies telles que Go, Java/Kotlin/Scala, PHP, Python, Pharo, Elixir, Clojure, et Haskell.

Les microservices peuvent utiliser des entités de configuration, telles que des fichiers Json ou des fichiers XML ou des représentations similaires, en tant qu'entrées pour fournir les composants de base de la logique, des transformations, du mappage et de la gestion des clés du système 1.

Chacun des services ou solutions (service de sécurité à jetons, service de gestion, solution de calcul intensif) accessibles via le microservice mandataire 20 peut être pris en charge par un microservice correspondant ou une chaîne de microservices fournissant la logique de mise en œuvre du service fourni. Dans le cadre du procédé selon l'invention, les microservices peuvent être exécutés individuellement et séparément dans une zone de sécurité en tant que microservice(s).

En particulier, un système 1 informatique de gestion d'autorisations selon l'invention comporte **un microservice mandataire** 20, configuré pour recevoir des informations d'accès d'un client utilisateur 2. Le microservice mandataire 20 peut être couplé à un complément permettant de prendre en compte des politiques d'autorisation spécifiques à chaque microservice (logique métier), cela permettant une normalisation des échanges entre le microservice mandataire 20 et le microservice de sécurité à jetons 30. En particulier, cela peut être utilisé pour synchroniser des attributs utilisateurs (potentiellement de nature très différente entre eux) en correspondance avec les rôles spécifiques aux logiques métier/microservices.

Le microservice mandataire 20 est avantageusement configuré pour acheminer les demandes entrantes vers le microservice approprié en fonction du point de terminaison (« endpoint » en terminologie anglosaxonne) spécifié, de la logique et / ou des arguments.

En particulier, les microservices de calcul 50, 51, 52, 53 couplés au microservice mandataire 20 peuvent être configurés pour pointer vers (ou être liés) respectivement à un service particulier ou à un serveur particulier. Ainsi, quand un microservice de calcul est appelé, un service de calcul intensif correspondant est sélectionné.

En particulier, un système 1 informatique de gestion d'autorisations selon l'invention comporte **un microservice de sécurité à jeton 30,** configuré pour recevoir les informations d'accès d'un client utilisateur 2, pour authentifier le client utilisateur 2 et pour déterminer au moins un attribut de rôle pour le client utilisateur 2 à partir des informations d'accès et de données mémorisées dans un référentiel de sécurité 35,36,37.

De façon préférée, le microservice de sécurité à jeton 30 est en outre configuré pour générer un jeton, ledit jeton permettant un accès à toutes les solutions de calcul intensif accessibles audit client utilisateur 2 en fonction de l'au moins un attribut de rôle déterminé.

De façon préférée, bien que le microservice de sécurité à jeton 30 fasse partie d'un système 1 informatique de gestion selon l'invention, il est avantageusement hébergé sur un ou plusieurs dispositifs informatiques (e.g. serveurs) différents distinct du ou des dispositifs informatiques hébergeant le microservice mandataire 20 et/ou les microservices de calcul 50, 51, 52, 53.

Le microservice de sécurité à jeton 30 peut être configuré pour acheminer les demandes entrantes vers le service approprié en fonction du point de terminaison (« endpoint » en terminologie anglosaxonne) spécifié, de la logique et / ou des arguments.

En particulier, le microservice de sécurité à jeton 30 couplé au microservice mandataire 20 peut être configuré pour pointer vers (ou être lié à) un service particulier ou à un serveur particulier. Le microservice de sécurité à jetons 30 peut être configuré pour accéder à une pluralité d'annuaire, de préférence au moins des annuaires de type LDAP 35, Active Directory 36 et Kerberos 37.

En outre, le microservice de sécurité à jetons 30 peut avantageusement être configuré de façon à pouvoir attribuer des rôles partagés ou des rôles spécifiques, de préférence il est configuré de façon à pouvoir attribuer un rôle partagé par tous les microservices de calculs 50, 51, 52, 53.

Le système 1 informatique de gestion d'autorisations selon l'invention comporte **au moins un microservice de calcul 50, 51, 52, 53** pour chacune des solutions de calcul intensif 70,71,72,73. Chacun des microservice de calcul 50, 51, 52, 53 peut être relié à sa solution de calcul intensif respectif dans des canaux sécurisés telles que des connexions ssh ou mobile shell.

De préférence, chacun des microservices de calcul 50, 51, 52, 53, est configuré pour déterminer des autorisations accordées au client utilisateur 2.

En effet, une fois qu'un attribut de rôle a été déterminé celui-ci peut être transféré à un microservice qui pourra, sur la base de la valeur d'attribut de rôle et des données contenues dans un référentiel d'autorisations 40, déterminer des autorisations accordées au client utilisateur 2.

En outre, un système 1 informatique de gestion d'autorisations selon l'invention peut également comporter un microservice 55 de gestion. Un tel microservice de gestion pourra être connecté aux microservices de calcul 50, 51, 52, 53, au microservice mandataire et au microservice de sécurité à jetons. De plus, ce microservice de gestion pourra être configuré pour répartir les taches de calcul entre les moyens de calcul et de les ordonner. En particulier, il pourra être configuré pour organiser l'exécution optimale des taches par les différentes solutions de calcul intensif disponibles. En outre, un tel microservice 55 de gestion pourra être relié à un service 75 dédié à l'ordonnancement.

En outre, le système 1 informatique de gestion d'autorisations selon l'invention peut également comporter un serveur 80 de visualisation distante, de préférence un serveur de visualisation 3D distante.

Un tel serveur 80 de visualisation distante permet à des clients utilisateurs 2 de faire exécuter des applications graphiques 2D / 3D interactives sur des serveurs distants au lieu de leur système, et d'ouvrir des sessions de visualisation pour les contrôler à distance. Ainsi, l'ensemble du calcul et du rendu des applications graphiques, y compris le rendu 3D, s'effectue côté serveur sur des ressources dédiées. Les entrées clavier et souris du client utilisateur 2 sont transférées au serveur qui, en retour, code la scène graphique en pixels et renvoie les données sous forme de flux vidéo au client utilisateur 2. Le client utilisateur 2 est alors uniquement responsable du rendu du flux vidéo 2D. Un tel serveur permet de ne travailler que sur des données distantes sans avoir à les transférer sur le réseau. En effet, en règle générale, les fichiers de résultats de calcul peuvent être très volumineux (de giga-octets à téraoctets) et ne peuvent pas être transférés efficacement via Internet ou des réseaux privés d'entreprise. En outre, une telle visualisation distante associée à la gestion des autorisations selon l'invention permet d'augmenter la sécurité de la technologie.

## Revendications

1. Procédé (100) de gestion d'autorisations accordées à un client utilisateur (2) à partir d'une interface agrégée (10) dans le cadre d'une gouvernance unifiée d'une pluralité de solutions de calcul intensif (70), lesdites solutions de calcul intensif (70) comportant au moins deux solutions sélectionnées parmi : un serveur de calcul haute performance (71), un serveur dédié à l'apprentissage supervisé ou non supervisé (72), et un serveur dédié aux calculs quantiques (73) ; la gouvernance unifiée étant assurée au moins en partie par un système informatique (1) de gestion d'autorisations comportant : un microservice mandataire (20), un microservice de sécurité à jeton (30), au moins un référentiel de sécurité (35,36,37), au moins un référentiel d'autorisations (40), et au moins un microservice de calcul (50,51,52,53) pour chacune des solutions de calcul intensif ; ledit procédé de gestion comportant les étapes de :
- Réception (110), par le microservice de sécurité à jeton (30), d'informations d'accès d'un client utilisateur (2),
- Authentification (120) du client utilisateur (2) et détermination (130), par le microservice de sécurité à jeton (30), d'au moins un attribut de rôle pour le client utilisateur (2) à partir des informations de commande d'accès et de données mémorisées dans le référentiel de sécurité (35,36,37),
- Génération (140) d'un jeton, par le microservice de sécurité à jeton (30), ledit jeton permettant un accès à toutes les solutions de calcul intensif accessibles audit client utilisateur (2) en fonction de l'au moins un attribut de rôle déterminé, et
- Détermination (150) d'autorisations accordées au client utilisateur (2), par l'au moins un microservice de calcul (50, 51, 52, 53), ladite détermination étant basée sur l'au moins un attribut de rôle déterminé et des données contenues dans l'au moins un référentiel d'autorisations (40).

2. Procédé (100) de gestion d'autorisations accordées à un client utilisateur (2) selon la revendication 1, **caractérisé en ce que** les informations d'accès d'un client utilisateur (2) proviennent d'un message envoyé depuis une interface agrégée (10) du client utilisateur (2) au microservice mandataire (20).

3. Procédé (100) de gestion d'autorisations accordées à un client utilisateur (2) selon la revendication 2, **caractérisé en ce que** le message provenant du client utilisateur (2) comporte des données d'identification du client utilisateur (2).

4. Procédé (100) de gestion d'autorisations accordées à un client utilisateur (2) selon l'une quelconque des revendications 1 à 3, **caractérisé en ce que** la génération d'un jeton par le microservice de sécurité à jeton (30) comporte l'accès à une pluralité d'annuaires, de préférence à au moins des annuaires de type LDAP, Active Directory et Kerberos.

5. Procédé (100) de gestion d'autorisations accordées à un client utilisateur (2) selon l'une quelconque des revendications 1 à 4, **caractérisé en ce que** l'étape de détermination (130) d'au moins un attribut de rôle pour le client utilisateur (2) comporte l'attribution d'un rôle partagé par tous les microservices de calculs (50,51,52,53).

6. Procédé (100) de gestion d'autorisations accordées à un client utilisateur (2) selon l'une quelconque des revendications 1 à 4, **caractérisé en ce que** l'étape de détermination (130) d'au moins un attribut de rôle pour le client utilisateur (2) comporte l'attribution d'un rôle spécifique à au moins un microservice de calcul (50,51,52,53).

7. Procédé (100) de gestion d'autorisations accordées à un client utilisateur (2) selon l'une quelconque des revendications 1 à 6, **caractérisé en ce que** l'étape de détermination (130) d'au moins un attribut de rôle pour le client utilisateur (2) est réalisée à partir des informations de commande d'accès et de données mémorisées dans un référentiel de sécurité (35,36,37).

8. Procédé (100) de gestion d'autorisations accordées à un client utilisateur (2) selon l'une quelconque des revendications 1 à 7, **caractérisé en ce qu'**il comporte une étape de modification de l'interface agrégée en fonction d'autorisations accordées au client utilisateur (2).

9. Procédé (100) de gestion d'autorisations accordées à un client utilisateur (2) selon l'une quelconque des revendications 1 à 8, **caractérisé en ce qu'**il comporte une étape de planification des taches comportant la détermination, par au moins un microservices de calcul, d'une quantité de ressource d'une solution de calcul qui sera attribuée à une tache donnée.

10. Système informatique (1) de gestion d'autorisations accordées à un client utilisateur (2) à partir d'une interface agrégée (10) dans le cadre d'une gouvernance unifiée d'une pluralité de solutions de calcul intensif (70), lesdites solutions de calcul intensif (70) comportant au moins deux solutions sélectionnées parmi : un serveur de calcul haute performance (71), un serveur dédié à l'apprentissage supervisé ou non supervisé (72), et un serveur dédié aux calculs quantiques (73) ; ledit système (1) informatique de gestion d'autorisations comportant :
- un microservice mandataire (20), configuré pour recevoir des informations d'accès d'un client utilisateur (2) ;
- un microservice de sécurité à jeton (30), configuré pour recevoir les informations d'accès d'un client utilisateur (2) reçues par le microservice mandataire (20), pour authentifier le client utilisateur (2) et pour déterminer au moins un attribut de rôle pour le client utilisateur (2) à partir des informations d'accès et de données mémorisées dans un référentiel de sécurité (35,36,37),
- ledit microservice de sécurité à jeton (30) étant en outre configuré pour générer un jeton, ledit jeton permettant un accès à toutes les solutions de calcul intensif accessibles audit client utilisateur (2) en fonction de l'au moins un attribut de rôle déterminé ;
- au moins un microservice de calcul (50,51,52,53), pour chacune des solutions de calcul intensif, l'au moins un microservice de calcul (50,51,52,53) étant configuré pour déterminer des autorisations accordées au client utilisateur (2), ladite détermination étant basée sur l'au moins un attribut de rôle déterminé et des données contenues dans un référentiel d'autorisations (40).

11. Système informatique (1) de gestion d'autorisations accordées à un client utilisateur (2) selon la revendication 10, **caractérisé en ce que** le microservice de sécurité à jeton (30) est configuré pour accéder à une pluralité d'annuaire, de préférence à au moins des annuaires de type LDAP, Active Directory et Kerberos.

12. Système informatique (1) de gestion d'autorisations accordées à un client utilisateur (2) selon l'une des revendications 10 ou 11, **caractérisé en ce qu'**il comporte un complément permettant de prendre en compte des politiques d'autorisation spécifiques à chaque microservice, cela permettant une normalisation des échanges entre le microservice mandataire (20) et le microservice de sécurité à jeton (30).

13. Système informatique (1) de gestion d'autorisations accordées à un client utilisateur (2) selon l'une quelconque des revendications 10 à 12, **caractérisé en ce que** le microservice de sécurité à jeton (30) est configuré de façon à pouvoir attribuer des rôles partagés ou des rôles spécifiques, de préférence il est configuré de façon à pouvoir attribuer un rôle partagé par tous les microservices de calculs (50,51,52,53).

14. Système informatique (1) de gestion d'autorisations accordées à un client utilisateur (2) selon l'une quelconque des revendications 10 à 13, **caractérisé en ce que** les microservices de calcul (50) sont sélectionnées parmi : un microservice (51) relié à un serveur de calcul haute performance (71), un microservice (52) relié à un serveur dédié à l'apprentissage supervisé ou non supervisé (72), et un microservice (53) relié à un serveur dédié aux calculs quantiques (73), en particulier aux simulations de calcul quantique.

15. Système informatique (1) de gestion d'autorisations accordées à un client utilisateur (2) selon l'une quelconque des revendications 10 à 14, **caractérisé en ce que** le microservice de sécurité à jeton (30) est hébergé sur un ou plusieurs dispositifs informatiques différents, distincts du ou des dispositifs informatiques hébergeant le microservice mandataire (20) et/ou les microservices de calcul (50, 51, 52, 53).
